Europäisches Patentamt

European Patent Office

Office européen des brevets

(19)

(11) Veröffentlichungsnummer : **0 162 408**
**B1**

(12)

# EUROPÄISCHE PATENTSCHRIFT

(45) Veröffentlichungstag der Patentschrift :
24.01.90

(51) Int. Cl.⁵ : **G 03 B 21/62**

(21) Anmeldenummer : 85105940.2

(22) Anmeldetag : 14.05.85

(54) Projektionswand für zwei- oder dreidimensionale Projektionen.

(30) Priorität : 19.05.84 DE 3418661

(43) Veröffentlichungstag der Anmeldung :
27.11.85 Patentblatt 85/48

(45) Bekanntmachung des Hinweises auf die Patenterteilung : 24.01.90 Patentblatt 90/04

(84) Benannte Vertragsstaaten :
AT BE CH DE FR GB IT LI LU NL SE

(56) Entgegenhaltungen :
DE—A— 2 201 467
GB—A— 1 129 925
GB—A— 1 159 076
US—A— 3 844 644
Prüfergebnisse PE 3.2 für Plexiglas der Firma
Röhm(Seiten 4-9)
Die Akte enthält technische Angaben, die nach dem
Eingang der Anmeldung eingereicht wurden und die
nicht in dieser Patentschrift enthalten sind.

(73) Patentinhaber : Daszinnies, Jürgen
Erlengrund 1
D-2202 Barmstedt (DE)

(72) Erfinder : Daszinnies, Jürgen
Erlengrund 1
D-2202 Barmstedt (DE)

(74) Vertreter : Siewers, Gescha, Dr. et al
Rechtsanwälte Dr. Harmsen, Dr. Utescher Dipl.-
Chem. Harmsen, Bartholatus Dr. Schaeffer, Dr.
Fricke, Wolter Patentanwalt Dr. Siewers Adenauerallee 28
D-2000 Hamburg 1 (DE)

## Beschreibung

Die Erfindung betrifft einen Projektionsträger für Durchlichtprojektion in Form von Scheiben aus Kunststoff, mit einer Lichtdurchlässigkeit von 45 bis 98 %, wobei der Kunststoff gleichmäßig verteilte Opalisierungsmittel enthält.

Der aus der DE-OS 22 01 467 bekannte Projektionsschirm dient zur Durchprojektion von Diapositivbildern oder Filmen, insbesondere von farbigen Bildern. Diese Druckschrift geht von einem Stand der Technik aus, der von mit mattiertem oder diffusierendem lackbeschichteten Kunststoffplatten gebildet wird. Der Stand der Technik will die damit verbundenen Nachteile, nämlich schlechte Haftung der Schichten auf der Trägerplatte und die leichte mechanische Verletzbarkeit, wodurch durchlässige Stellen entstehen, vermeiden und schlägt daher vor, für die Durchprojektion eine massive Kunststoffplatte zu verwenden, der ein Pigment beigemischt ist, so daß sich eine im wesentlichen homogene Verteilung ergibt. Mechanische Beschädigungen auf der Oberfläche vermögen hier keine Änderung der Projektionseigenschaften zu bewirken, weil die Zerstreuung nicht auf die Oberfläche beschränkt ist, sondern über die gesamte Stärke der Platte erfolgt.

Je nach Verwendungszweck der Platten schlägt der Stand der Technik vor, im wesentlichen starre Platten mit einer Dicke von 1 bis 2 mm zu verwenden oder auch biegsame Folien, die in entsprechende Rahmen einspannbar sind.

Als Kunststoffmaterial für diese pigmentierten Platten wird jeder farblose Kunststoff als geeignet dargestellt, wobei als zu dispergierender Pigmentbestandteil monoklines Magnesium-silikat, Calciummonosilikat, weißes Baryt und Zinkoxyd mit einer Teilchengröße unter 1 μm genannt wird. Für die Kunststoffe, die mit dem Pigment gefüllt werden sollen, nennt der Stand der Technik Acrylnitrilglas, Polycarbonatglas, Nitrocelluloseglas, Celluloseestergläser, Polyestergläser sowie Acryl-Butadien-Styrolgläser.

Die Lichtdurchlässigkeit des in der DE-A-2201467 genannten Projektionsschirms soll zwischen 60 und 77 % liegen, wobei ein sogenannter « Hot Spot » noch nicht auftreten soll.

Es wird auch ausgeführt, daß die Lichtdurchlässigkeit, die hier mit Bezug auf einen Standard bestimmtet Durchlichtprojektionswände ausgedrückt wird, vom Betrachtungswinkel abhängt und bei sehr kleinen Betrachtungswinkeln am größten ist. Es werden drei verschiedene Beispiele für Pigmentierungen angegeben, die auch unterschiedliche Werte für die Lichtdurchlässigkeit ergeben, wobei sich der günstigste Wert für einen Anteil mit 20 bis 30 Gew% monoklinem Calciummonosilikat und 0.001 Gew.% Ruß ergibt, während größere Bestandteile und andere Beimengungen zu ungünstigeren Verhältnissen führen.

Nachteilig beim Stand der Technik ist die Tatsache, daß das monokline Magnesiumsilikat bzw. Calciumsilikat polarisierte Lichtwellen depolarisiert, da diese Materialien anisotrope Kristalle umfassen. Das ist unschädlich, wenn der Projektionsträger lediglich für eine zweidimensionale Projektion zum Einsatz gelangen soll. Bei bestimmten Anwendungsbereichen, beispielsweise bei Flugsimulatoren, bei Fernsehhintergrundprojektionseinrichtungen sowie im Administrativen- und Erziehungsbereich wie auch bei Ausstellungs- und Demonstrationsanordnungen kann es aber vorkommen, daß auch Stereodarstellungen gewünscht werden. Dies geschieht, wie beispielsweise in der britischen Patentschrift 1129925 ausgeführt wird, dadurch, daß z. B. zwei unterschiedliche Bilder für die beiden Augen des Betrachters projiziert werden, und zwar mit jeweils anders poralisiertem Licht, wobei das projizierte Bild mit entsprechend polarisierten Brillen zu betrachten ist. In diesem Falle kann ein Bildschirm gemäß dem Stand der Technik nicht benutzt werden, weil durch die Depolarisierungseffekte der räumliche Eindruck entweder verfälscht oder ganz beseitigt wird. Gemäß dieser britischen Patentschrift wird das Problem dadurch gelöst, daß auf einen Projektionsschirm aus einem transparenten Medium eine Schicht aufgebracht wird, in der Silikataerogelteilchen mit einem Teilchendurchmesser von weniger als 35 Å dispergiert sind. Dies hat aber wieder den Nachteil, daß die Schicht, die in Richtung auf den Betrachter angeordnet werden muß, kratzempfindlich ist und daher bei rauhem Betrieb nicht eingesetzt werden kann da bei mechanischen Beschädigungen « heiße Punkte » entstehen, die bei dem Betrachter sehr störend sein können und die illusionbildliche Darstellung, insbesondere auch der räumlichen Darstellung zerstören können.

Aufgabe der Erfindung ist es daher, einerseits einen Projektionsträger zu schaffen, der gegenüber mechanischen oberflächlichen Beschädigungen unempfindlich ist, also einen Kunststoff enthält der gleichmäßig verteilt Opalisierungsmittel aufweist andererseits aber keine oder nur sehr geringe Drehung der Polarisationsebene verursacht, so daß auch eine dreidimensionale Darstellung ohne Probleme möglich ist. Dabei soll eine möglichst gleichmäße Verteilung der Lichtstärke auf dem Bildschirm erreicht werden, d. h., daß nicht etwa nur in der Mitte ein helles Bild und am Rand ein dunkleres Bild erscheint. Zudem soll der Projektionsträger auch bei Tageslicht einsetzbar sein, d. h., er soll möglichst wenig durch Streulicht an Bildqualität verlieren.

Gegenüber dem Stand der Technik soll das Auflösungsvermögen mindestens gleich gut und die Lichtdurchlässigkeit möglichst hoch sein.

Gelöst wird die Aufgabe durch die Gesamtheit der Merkmale des Hauptanspruchs.

Bei einem Streuvermögen von $\sigma < 0,3$ und dem Leuchtdichtekoeffizientene für den Abstrahlungswinkel $\varepsilon_2 = 5°$ von 0,5 oder höher ergibt sich, daß ein verhältnismäßig helles Bild in einem Abstrahlwinkelbereich von insgesamt etwa 10° entsteht, was für die hier bevorzugten Anwendungsfälle ausreichend ist, da mehrere Personen in der Lage sind, das Bild in seinen optimalen Eigenschaften zu sehen.

Die erfindungsgemäßen Merkmale stellen eine besonders glückliche Kombination dar, die zu überraschend vorteilhaften Wirkungen führt. So wird einerseits durch die verhältnismäßig hohe Lichtdurchlässigkeit von 45 bis 98 %, vorzugsweise gemäß einer Weiterbildung der Erfindung von etwa 85 %, ein sehr helles Bild sichtbar, andererseits begrenzt die verhältnismäßig geringe Streuung die Anzahl der möglichen Zuschauer, hat aber den Vorteil, daß Streulicht von außen weniger störend in Erscheinung tritt. Das hier verwendete Material hat außerdem den Vorteil daß die für dreidimensionale Projektionen notwendige geringe Drehung der Polarisationsebene erreicht werden kann.

Damit eine günstige Farbwiedergabe mit weitgehend unverfälschten Farbwerten erreicht wird, ist außerdem die Tatsache günstig, daß die verwendeten Materalen keine Eigenfärbung aufweisen. Auch Szintillationseffekte, die störend in Erscheinung treten können, fallen bei den gewählten Materialien weg.

Von besonderer erfindungsgemäßer Bedeutung ist, daß völlig überraschenderweise ganz bestimmte glasartige Kunststoffe, die hier genannt werden, durch Opalisierungsmittel derartig opalisierbar sind, daß sie die hier geforderten Eigenschaften aufweisen. Es handelt sich dabei um Polymethylmethacrylate oder deren Copolimere, und zwar um ganz bestimmte Vertreter dieser Kunststoffe, deren Zusammensetzung am besten durch die Marktbezeichnungen wiedergegeben werden, wobei es sich um die Bezeichnung « Plexiglasopal »® (Fa. Röhm); « Riacryl Opal »® (Fa. Rias) sowie das Material « Perspex Opal »® (Fa. ICI) handelt. Diese Kunststoffe, die bislang für völlig andere Verwendungszwecke eingesetzt wurden, erfüllen als Projektionsträger alle an sie gestellten Forderungen, liefern nämlich ein gleichmäßig helles Bild natürliche Farbwiedergabe fast ohne Szintillation und insbesondere bei dreidimensionaler Projektion eine völlig natürliche dreidimensionale Bildwiedergabe ohne die infolge von Drehung der Polarisationsebene entstehenden Störungen wie Doppelbilder, etc.

Das Folgende diene zur weiteren Erläuterung der Erfindung : Die physikalischen Eigenschaften wurden ermittelt anhand einer Kunststoffscheibe mit einer Dicke von 3 mm und den Abmessungen 1 m x 2 m wobei zur Messung des Streuvermögens $\sigma$ sowie des Leuchtdichtekoeffizientene für einen bestimmten Abstrahlungswinkel eine Meßanordnung diente, wie sie in der Industrie zur Untersuchung von transparenten oder opalisierten Kunststoffen üblich sind. Die Lichtdurchlässigkeit (definiert als das Verhältnis von durchgelassenem Lichtstrom zu auffallendem Lichtstrom) betrug bei dem hier in Rede stehenden beispielshaften Aufbau 85 %. Das Streuvermögen $\sigma$ definiert gemäß den üblichen Prüfrichtlinien (siehe beispielsweise in Deutschland die deutsche Industrienorm DIN 5036 Blatt 4) war kleiner als 0,3 und der Leuchtdichtekoeffziente betrug für einen bestimmten Abstrahlungswinkel ($\varepsilon_2 = 5°$) 0,5 oder mehr. Bei Verwendung für die zwei- und dreidimensionale Durchlichtprojektion ergaben sich gleichmäßig helle Bilder ohne « hot spot » und ohne merkliche Abdunklung der Bilder an den Rändern. Farbverhalten und Farbbrillianz waren ausgezeichnet. Doppelbilder infolge von Depolarisation waren nicht zu beobachten, so daß die dreidimensionale Wiedergabe optimal war.

Die erfindungsgemäß hergestellten Projektionsträger können für Dia, Film, Video oder für Laserdarstellung eingesetzt werden.

## Patentanspruch

Verwendung eines an sich bekannten Materials, wie bspw. « Plexiglasopal »® (Fa. Röhm) oder « Riacryl Opal »® (Fa. Rias) oder « Perspex Opal »® (Fa. ICI), in Platten-oder Folienform, mit einem Transmissionsgrad von 45-98 % als Durchlichtprojektionsschirm.

## Claim

Use of known materials like, for instance, « Plexiglasopal »® (Röhm) or « Riacryl Opal »® (Rias) or « Perspex Opal »® (ICI) in the form of plates or foils with a transmission degree of 45 to 98 percent as a transmitted light projection screen.

## Revendication

Utilisation d'une matière connue comme, par exemple, « Plexiglasopal »® (Röhm) ou « Riacryl Opal »® (Rias) ou « Perspex Opal »® (ICI) sous forme de panneaux ou de feuilles avec un degré de transmission de 45 à 98 pour cent comme un écran de projection par transparence.